# EUROPÄISCHE PATENTSCHRIFT

(11) **EP 1 098 411 B1**
(45) Veröffentlichungstag und Bekanntmachung des Hinweises auf die Patenterteilung: **18.09.2002**
(21) Anmeldenummer: 00116973.9
(22) Anmeldetag: 08.08.2000
(51) Int. Cl.: H02G 3/14, H02B 1/06

(54) **Abdeckrahmen für elektrische Installationsgeräte**
Covering frame for electrical installation apparatus
Châssis de couvercle pour des appareils d'installation électrique

(30) Priorität: 02.11.1999 DE 19952600
(43) Veröffentlichungstag der Anmeldung: 09.05.2001
(73) Patentinhaber: Gebr. Berker GmbH & Co KG, 58579 Schalksmühle (DE)
(72) Erfinder: Klauer, Wilfried, 58091 Hagen (DE)

(56) Entgegenhaltungen:
- GB-A- 2 085 229
- US-A- 3 197 549
- US-A- 5 073 681

## Beschreibung

Die Erfindung betrifft einen Abdeckrahmen für elektrische Installationsgeräte, insbesondere für Unterputzgeräte, hergestellt aus Metall, Kunststoff oder Verbundwerkstoff gemäß dem Oberbegriff des Anspruchs 1.

Bekannte Abdeckrahmen dieser Art, die für Geräte wie z. B. Schalter, Steckdosen, Lichtsignale, Dimmer, Kommunikationsgeräte sowie Geräte der Gebäudesystemtechnik und dergleichen Verwendung finden, werden bisher aus Kunststoffen, Verbundwerkstoffen, Metallen sowie mit Hilfe von Trägerelementen und Metallummantelungen unter Anwendung der unterschiedlichsten Herstellverfahren wie Spritzgießen, spanende Bearbeitung, Pressen, Stanzen, Tiefziehen, Gießen etc. hergestellt. Es sind auch Kombinationen sowohl der verwendeten Materialien als auch der Bearbeitungsverfahren bekannt.

Ein dem Oberbegriff des Hauptanspruches entsprechender Abdeckrahmen für elektrische Installationsgeräte ist durch die GB-A-2 085 229 bekannt geworden. Dieser Abdeckrahmen weist entsprechende Ausschnitte für die Umfassung eines Bedienelementes auf, wobei lediglich an zwei gegenüberliegenden Endbereichen Seitenflächen vorhanden sind. Der Abdeckrahmen ist aus einem flachen Metallblech mit spezifischen Abmessungen hergestellt, wobei die Seitenflächen durch einen Biegevorgang angeformt werden. Insbesondere bei spröden Werkstoffen z. B. Metallen, Verbundwerkstoffen oder Kunststoff ist ein solches Vorgehen nicht möglich oder nur durch ein aufwendiges und teures, mehrschrittiges Biegeverfahren zu realisieren. Dies ist deshalb der Fall, weil ansonsten oftmals zumindest unschön aussehende oder aber auch technisch schadhafte Abdeckrahmen entstehen können. Außerdem ist es bei einem solchen Verfahren notwendig, dass entsprechend den geforderten Abmessungen für Einfach- und Mehrfachabdeckungen maßlich darauf abgestimmte Metallbleche hergestellt werden müssen, was entsprechend aufwendig und teuer ist.

Desweiteren ist durch die US-A-5 073 681 ein Abdeckrahmen für elektrische Installationsgeräte üblicher Ausgestaltung bekannt geworden, der über seinen Ausschnitt an einem am Trägerelement vorhandenen Kragen festlegbar ist.

Der vorliegenden Erfindung liegt deshalb die Aufgabe zugrunde, auf einfache und preiswerte Art und Weise einen in seiner Länge auf den jeweils vorliegenden Anwendungsfall abgestimmten, profilierten Abdeckrahmen für Einfach- und Mehrfachabdeckung auch aus spröden Materialien zu schaffen.

Erfindungsgemäß wird dies durch die kennzeichnenden Merkmale des Anspruchs 1 erreicht. Vorteilhafte Ausgestaltungen der Erfindung sind in den Merkmalen der Unteransprüche angegeben.

Durch Endlosprofile können unter Berücksichtigung wirtschaftlicher Gesichtspunkte bei minimierten Kosten und größtmöglicher Flexibilität Einfachund Mehrfachabdeckungen jedweder Länge hergestellt werden, ohne dass zur Profilierung des Abdeckrahmens ein Biegevorgang notwendig ist. Durch eine Aufnahmeeinrichtung, die als Trägerelement für verschiedenartige Unterputzgeräte ausgebildet ist und die problemlos in die Ausschnitte der Profilrahmenabschnitte bzw. der Abdeckrahmen einsetzbar ist, wird der erfindungsgemäße Abdeckrahmen komplettiert, so dass die Aufnahme unterschiedlicher elektrischer Unterputzgeräte bei einfachster Handhabung gewährleistet ist.

In den Zeichnungsfiguren sind Ausführungsbeispiele der Erfindung dargestellt. Es zeigt:
- Fig. 1:: perspektivisch beispielhaft ein Endlosprofil für eine Vielzahl von Abdeckrahmen mit Blick auf die Unterseite;
- Fig. 2:: perspektivisch mit Blick auf die Unterseite zwei Abschnitte des Endlosprofils aus Fig. 1;
- Fig. 3:: perspektivisch in Draufsicht einen Abschnitt aus Fig. 2, versehen mit einem Ausschnitt, sowie ein Trägerelement als Aufnahmeeinrichtung für ein Unterputzgerät;
- Fig. 4:: perspektivisch den Zusammenbau des erfindungsgemäßen Abdeckrahmens und des Trägerelementes gemäß Fig. 3;
- Fig. 5:: eine Schnittdarstellung gemäß Fig. 4 nach der Linie A-A, sowie daraus die Einzelheit "Z" aus der in vergrößerter Darstellung die Befestigung zwischen Abdeckrahmen und Trägerelement besonders gut hervorgeht;
- Fig. 6:: perspektivisch in Draufsicht den erfindungsgemäßen Abschnitt des Endlosprofils, versehen mit einem geänderten Ausschnitt, sowie dazu ein entsprechendes Trägerelement;
- Fig. 7:: den Zusammenbau beider Teile gemäß Fig. 6;
- Fig. 8:: eine Schnittdarstellung gemäß Fig. 7 nach der Linie B-B, aus der die Befestigung eines alternativen Trägerelementes im Abdeckrahmen hervorgeht.

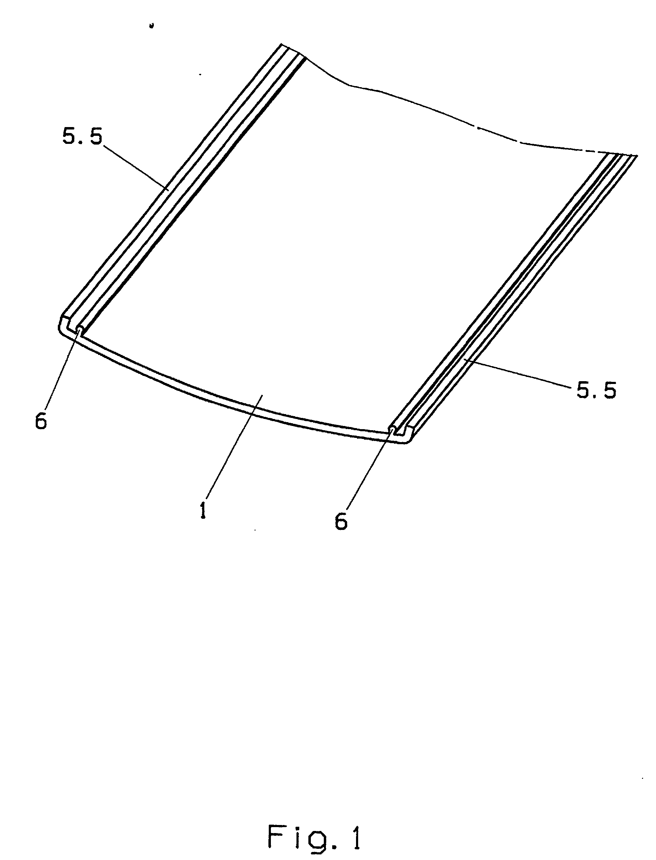

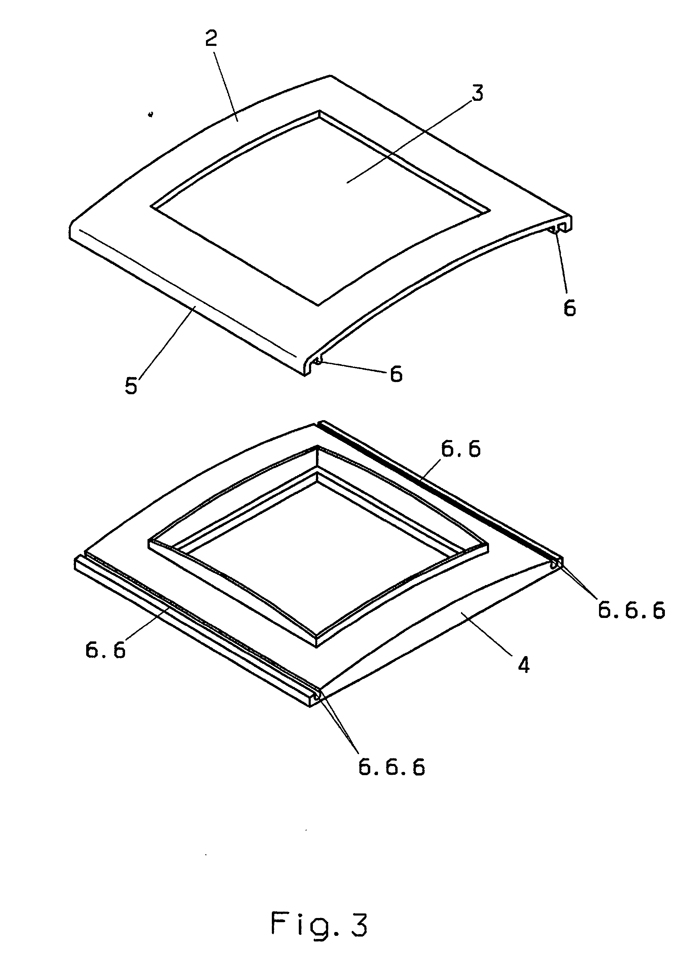

Entsprechend der Zeichnungsfiguren kann der Abdeckrahmen 2 gemäß Fig. 3 aus einem Endlosprofil 1 entsprechend Fig. 1 hergestellt sein.

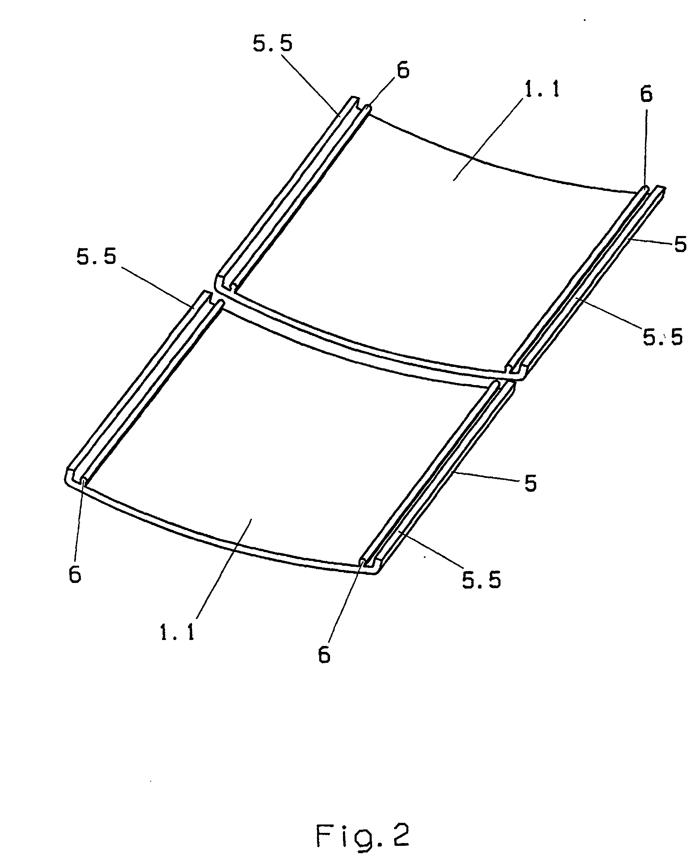

Die Fig. 2 zeigt perspektivisch zwei Abschnitte 1.1 des Endlosprofils 1 aus Fig. 1 mit Blick auf die Unterseite. Als Wandauflage dient die Querschnittsfläche 5.5 der Seitenflächen 5 des Abschnittes 1.1 des Endlosprofils 1. Parallel nach innen zu diesen Seitenflächen 5 verlaufen materialeinheitlich Leisten 6.

Die Fig. 3 zeigt perspektivisch in Draufsicht den vorgenannten Abschnitt 1.1 in Form der Ausführung als Abdeckrahmen 2 für eine Einfachabdeckung, der mit einem Ausschnitt 3 für den Einsatz eines Unterputzgerätes oder Bedienelementes versehen ist. Darunter ist das zugehörige Trägerelement 4 dargestellt.

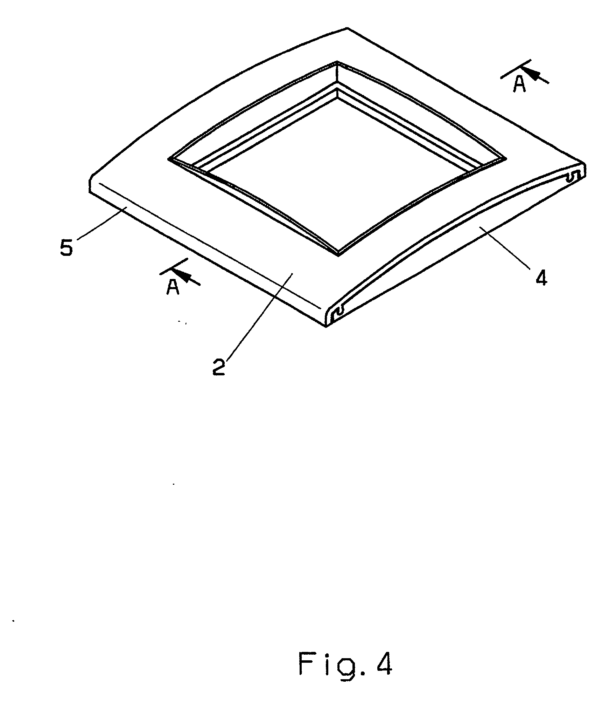

Die Fig. 4 zeigt perspektivisch den Abdeckrahmen 2 mit eingebautem Trägerelement 4 gemäß Fig. 3.

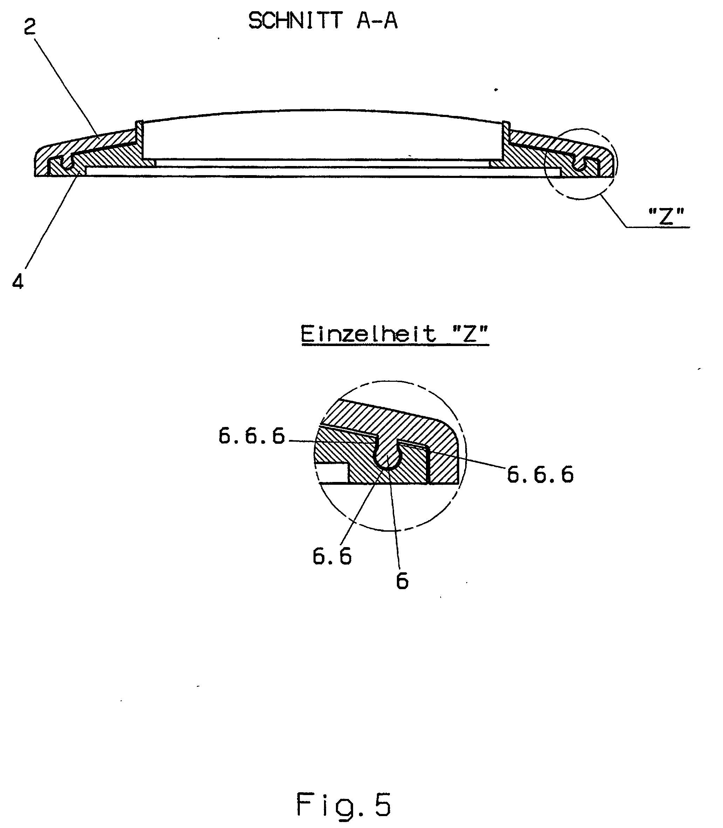

Die Fig. 5 zeigt eine Schnittdarstellung nach der Linie A-A gemäß Fig. 4. Wie daraus ersichtlich, ist der Abdeckrahmen 2 mit einer Aufnahmeeinrichtung in Form eines Trägerelementes 4 versehen, das ein Unterputzgerät bei der Installation aufnimmt. Zur Befestigung des Trägerelementes 4 im Abdeckrahmen 2 sind die birnenförmigen Leisten 6 vorgesehen. Dementsprechend verfügt das Trägerelement 4 über korrespondierende elastische Leistenaufnahmen 6.6, die in ihrem Einsteckbereich eine Einschnürung 6.6.6. aufweisen. Beim Zusammenbau von Abdeckrahmen 2 und Trägerelement 4 passieren die starren Leisten 6 mit ihrer birnenförmigen Ausbildung den elastischen Einsteckbereich der Einschnürung 6.6.6. und verrasten dort.

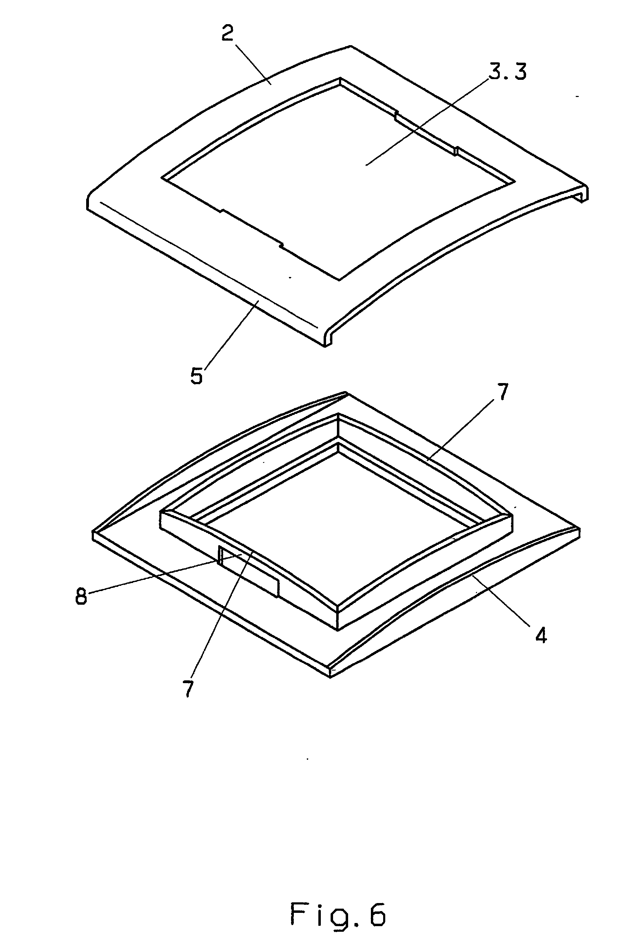

Die Fig. 6 zeigt perspektivisch einen weiteren Abschnitt 1.1 des Endlosprofils 1 in der Ausführung als Abdeckrahmen 2 für eine Einfachabdeckung, der mit einem geänderten Ausschnitt 3.3 für den Einsatz eines Unterputzgerätes oder Bedienelementes versehen ist. Darunter ist das entsprechende Trägerelement 4 mit angeformtem Kragen 7 dargestellt.

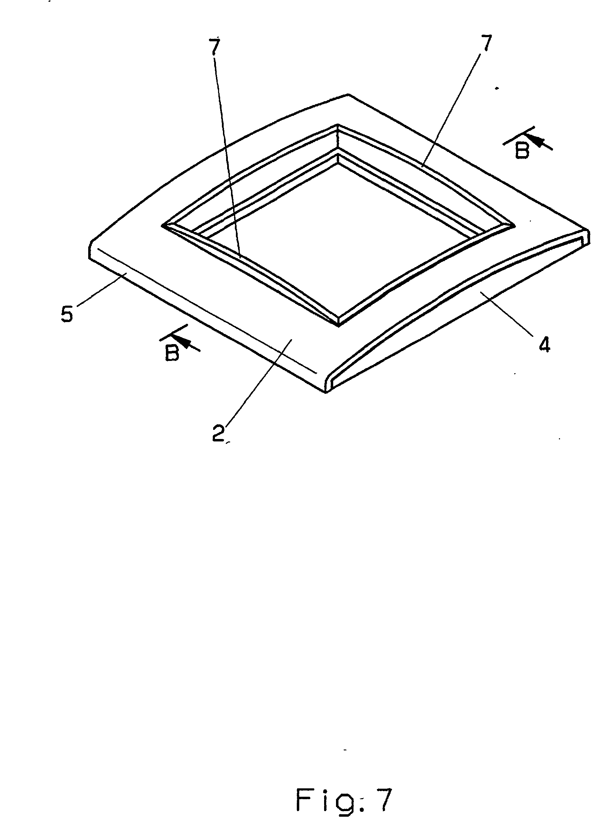

Die Fig. 7 zeigt perspektivisch den Abdeckrahmen 2 mit eingebautem Trägerelement 4 und mit angeformtem Kragen 7.

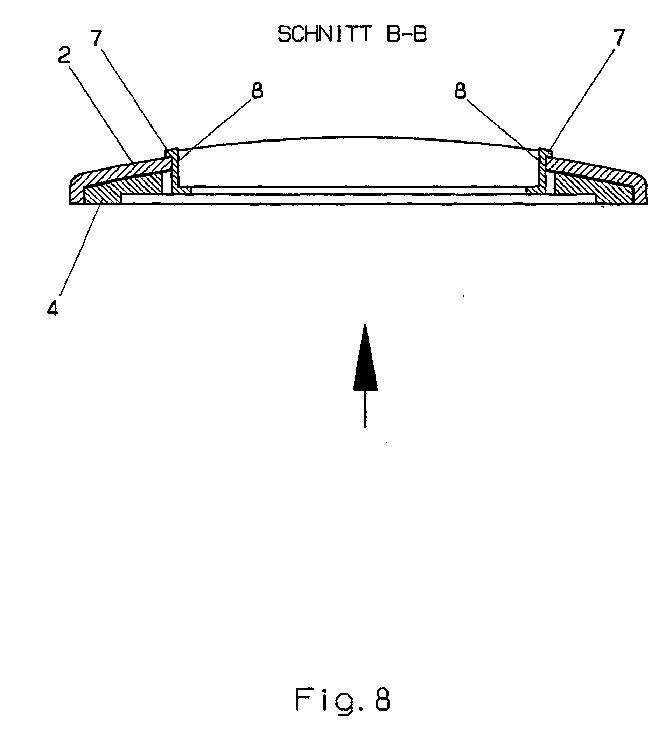

Die Fig. 8 zeigt eine Schnittdarstellung gemäß Fig. 7 nach der Linie B-B. Wie daraus ersichtlich ist der Abdeckrahmen 2 wieder mit einer Aufnahmeeinrichtung in Form eines Trägerelementes 4 versehen. Bei dieser alternativen Ausführung des Trägerelementes 4 wird die Befestigung am Abdeckrahmen 2 mit Hilfe eines angeformten Kragens 7 erreicht. Beim rückseitigen Einsetzen dieses Trägerelementes 4 gemäß Pfeil weicht die elastische Wand 8 des Kragens 7 zurück, bis der Einsteckvorgang erledigt ist. Danach ist die Befestigung zwischen Trägerelement 4 und Abdeckrahmen 2 hergestellt.

### Bezugszeichenliste

- 1 -: Endlosprofil
- 1.1 -: Abschnitt
- 2 -: Abdeckrahmen
- 3 -: Ausschnitt
- 3.3 -: Ausschnitt
- 4 -: Trägerelement
- 5 -: Seitenflächen
- 5.5 -: Querschnittsfläche
- 6 -: Leisten
- 6.6 -: Leistenaufnahmen
- 6.6.6 -: Einschnürung
- 7 -: Kragen
- 8 -: elastische Wand

## Patentansprüche

1. Abdeckrahmen (2), aus Metall, Kunststoff oder Verbundwerkstoff bestehend,mit Aufnahmeeinrichtung für elektrische Installationsgeräte, insbesondere für Unterputzgeräte mit entsprechenden Ausschnitten (3, 3.3) für die Umfassung eines Bedienelementes, wobei lediglich an zwei gegenüberliegend angeordneten Endbereichen Seitenflächen (5) vorhanden sind, **dadurch gekennzeichnet, dass** der Abdeckrahmen (2) sowohl für Einfachabdeckungen als auch für Mehrfachabdeckungen jeweils aus einem entsprechend gekürzten Abschnitt (1.1) eines Endlosprofils (1) besteht.

2. Abdeckrahmen nach Anspruch 1, **dadurch gekennzeichnet, dass** als Aufnahmeeinrichtung für die unterschiedlichen Geräte und Bedienelemente ein Trägerelement (4) aus Isoliermaterial dient.

3. Abdeckrahmen nach Anspruch 1 und 2, **dadurch gekennzeichnet, dass** für die Halterung des Trägerelementes (4) am Abdeckrahmen (2) der Abdeckrahmen Leisten (6) und das Trägerelement (4) über entsprechend korrespondierende Leistenaufnahmen (6.6) verfügt.

4. Abdeckrahmen nach Anspruch 1 und 3, **dadurch gekennzeichnet, dass** die Leisten (6) im Querschnitt quasi birnenförmig ausgebildet sind, wogegen die korrespondierenden Leistenaufnahmen (6.6) im Einsteckbereich eine Einschnürung (6.6.6) aufweisen.

5. Abdeckrahmen nach Anspruch 1 und 2, **dadurch gekennzeichnet, dass** alternativ für die Halterung des Trägerelementes (4) am Abdeckrahmen (2) das Trägerelement mit einem Kragen (7) versehen ist, der Bestandteil einer elastischen Wand (8) ist.

## Claims

1. A metal, plastics material or composite-material cover frame (2) with a receiving device for electrical installation apparatus, especially for flush-mounted apparatus, and with openings (3, 3.3) suitable for holding a control element, in which side surfaces (5) are present only on two opposite end regions, **characterised in that** the frame (2), in the case both of single and multiple covers, comprises a suitably short portion (1.1) of an endless profile (1).

2. A cover frame according to claim 1, **characterised in that** the device for receiving the various apparatus and control elements is a support element (4) made of insulating material.

3. A cover frame according to claims 1 and 2, **characterised in that** in order to secure the support element (4) to the cover frame (2), the frame has strips (6) and the support element (4) has corresponding strip-receiving means (6.6).

4. A cover frame according to claims 1 and 3, **characterised in that** the strips (6) are pear-shaped in cross-section whereas the strip-receiving means (6.6) has a constriction (6.6.6) in the insertion region.

5. A cover frame according to claims 1 and 2, **characterised in that** in an alternative method of securing the support element (4) to the cover frame (2), the support element has a collar (7) which is a component of an elastic wall (8).

## Revendications

1. Cadre de recouvrement (2) en métal, en matière plastique ou en matériau composite, comportant un dispositif de logement pour des appareils d'installation électriques, en particulier pour des appareils encastrés dans le mur, présentant des échancrures correspondantes (3, 3.3) pour l'encadrement d'un élément de manipulation, dans lequel des surfaces latérales (5) sont prévues seulement sur deux zones d'extrémité agencées en vis-à-vis, **caractérisé en ce que** le cadre de recouvrement (2) destiné aussi bien à des recouvrements unitaires qu'à des recouvrements multiples est constitué par un tronçon respectif (1.1) recoupé de façon correspondante à partir d'un profilé sans fin (1).

2. Cadre de recouvrement selon la revendication 1, **caractérisé en ce qu'**un élément porteur (4) en matériau isolant sert de dispositif de logement pour les appareils et pour les éléments de manipulation différents.

3. Cadre de recouvrement selon les revendications 1 et 2, **caractérisé en ce que** pour la monture de l'élément porteur (4) sur le cadre de recouvrement (2), le cadre de recouvrement dispose de listels (6) et l'élément porteur (4) dispose de logements de listel correspondants (6.6).

4. Cadre de recouvrement selon les revendications 1 et 3, **caractérisé en ce que** les listels (6) sont réalisés avec une section pratiquement en forme de poire, tandis que les logements de listel correspondants (6.6) présentent un rétrécissement (6.6.6) dans la zone d'enfichage.

5. Cadre de recouvrement selon les revendications 1 et 2, **caractérisé en ce qu'**en variante de la monture de l'élément porteur (4) sur le cadre de recouvrement (2), l'élément porteur est pourvu d'une collerette (7) qui fait partie d'une paroi élastique (8).
